# FASCICULE DE BREVET EUROPEEN

(11) **EP 2 021 871 B1**
(45) Date de publication et mention de la délivrance du brevet: **13.10.2010**
(21) Numéro de dépôt: 07730858.3
(22) Date de dépôt: 25.01.2007
(51) Int. Cl.: G03B 21/28, G02B 27/18, G03B 21/00, G02B 26/12

(54) **MOTEUR DE VIDEO PROJECTION NUMERIQUE MULTIFAISCEAUX A CORRECTION DE POINTE STATIQUE OU DYNAMIQUE AVEC PERISCOPE DE DEVIATION**
DIGITALER MEHRFACHSTRAHL-PROJEKTIONSVIDEOMOTOR MIT STATISCHER ODER DYNAMISCHER ZEIGERKORREKTUR MIT UMLENKPERISKOP
MULTIBEAM DIGITAL PROJECTION VIDEO MOTOR HAVING STATIC OR DYNAMIC POINTING CORRECTION WITH DEVIATION PERISCOPE

(30) Priorité: 26.01.2006 FR 0600726; 01.02.2006 FR 0600902
(43) Date de publication de la demande: 11.02.2009
(73) Titulaire: BreizhTech SAS, 22520 Binic (FR)
(72) Inventeur: DESAULNIERS, Jean-Marc, F-22520 Binic (FR)
(86) Numéro de dépôt international: PCT/FR2007/000140
(87) Numéro de publication internationale: WO 2007/085731

(56) Documents cités:
- EP-A- 1 233 292
- EP-A- 1 524 851
- WO-A-2005/057743
- WO-A-2005/098511
- US-A1- 2004 022 480
- US-B1- 6 240 116

## Description

La présente invention concerne un moteur de vidéo projection numérique à balayage multifaisceaux pour le Cinéma Numérique de 2^{ème} Génération, afin de réaliser la projection, p.ex. sur grand écran, d'un signal vidéo RVB, p.ex. à Ultra Haute Définition, utilisant, p.ex. comme source lumineuse un laser de faible et/ou moyenne puissance au sein d'un dispositif de génération d'un ou plusieurs faisceaux de pixels, complété d'un dispositif structurant ceux-ci, p.ex. en forme de matrice, de cercle, de spirale, de rosace, d'hélicoïde...

La fonction de réglage dynamique de pointé du faisceau lumineux en autorise l'utilisation dans d'autres domaines d'applications comme les télécommunications (p.ex. transmission point à point, point à multipoints, guidé ou en espace libre...).

La projection dans les salles de cinéma traditionnelles est réalisée à base de projecteurs à pellicules 35mm, 70mm, ou 62mm de type IMAX pour ce qui est des sites de projections intégrés dans des complexes récréatifs. Il existe maintenant un certain nombre d'implémentations, à base de technologie DLP ou LCD, qui permettent d'atteindre une résolution de 2K x 1K, ainsi qu'une implémentation, à base de technologie GLV, supportant 4K x 2K pixels. L'application de ces technologies à des résolutions élevées, induit des coûts exponentiels liés au développement des composants de bases (boîtiers DLP, GLV et matrice LCD). L'utilisation de composants métalliques microscopiques (micro-miroirs DMD pour la technologie DLP et micro-lamelles pour le GLV), induit des problèmes de champ magnétique résiduel, de résonance, de vieillissement (suite aux torsions multiples et répétées), d'oxydation ainsi qu'une limitation en ce qui a trait à la fréquence de battement et/ou rafraîchissement maximale pouvant être atteinte. Au niveau LCD les principaux problèmes résident dans l'utilisation ; 1) de filtres dichroïques induisant des pertes de transmission et une distorsion des composants de base de la couleur (mélange RVB, gamme et température) au niveau du signal lumineux reconstitué, 2) de matrices d'obturation LCD ayant une fréquence maximale d'activation / désactivation limitée. Ces effets conjugués rendent difficile l'optimisation du couple mélange/température de la couleur avec un niveau de contraste suffisant, requis par les cinéphiles.

Le champ d'application est orienté Cinéma Numérique très haut de gamme dans un premier temps, et pourra être ré-appliqué à d'autres segments de marché (p.ex. le « Home Cinéma ») une fois que le niveau d'intégration et les coûts d'industrialisation auront été suffisamment optimisés. Cette alternative aux technologies existantes consiste en l'utilisation d'un moteur de vidéo projection numérique multifaisceaux lumineux permettant de reproduire une séquence d'images couleur à Ultra Haute Définition (UHD), à l'aide d'une ou plusieurs sources lumineuses, suite à une série de réflexions des faisceaux lumineux sur des disques optiques rotatifs. Afin de densifier la résolution de l'image du moteur de projection numérique multifaisceaux, l'enjeu est de réaliser un faisceau coloré avec un pointé précis et ajustable de façon statique ou dynamique, d'en utiliser un certain nombre au travers ou non d'une tête matricielle optique qui les structure, p.ex. en matrice, complétée ou non d'un périscope de déviation pour balayer l'écran avec plusieurs faisceaux simultanément,

comme défini dans les revendication, 1-19,

Le principe de l'invention Le document WO 2005/098511 A2 divulgne un micro afficheur optique. est l'intégration de différents modules, ou éléments constitutifs, d'un projecteur vidéo numérique multifaisceaux.

Un module source optique de base permet d'assurer la collimation ou focalisation d'un faisceau, monochromatique ou non, avec un réglage statique ou dynamique du pointé.

Un générateur de faisceau coloré utilisant un certain nombre de modules sources optique complétés d'un certain nombre de miroirs et/ou filtres positionnés afin de superposer ou rendre colinéaire plusieurs faisceaux de longueurs d'ondes différentes, p.ex. Rouge, Vert et Bleu, en un groupe de faisceaux parallèles, contigus ou non, avec chevauchement partiel ou total, dont la résultante couleur est la somme en un point donné de chacune des composantes monochromatiques. Ce module génère un pixel ou groupe de pixels colorés, p.ex. structurés sous une forme matricielle.

Une tête matricielle optique qui regroupe un certain nombre de modules sources optique, ou de générateurs de faisceaux colorés, positionnés sur un certain nombre d'étages d'anneaux au centre desquels se trouve un dispositif, p.ex. de forme pyramidale, permettant par réflexion et/ou transmission sur des miroirs et/ou filtres, la réalisation d'un ensemble de faisceaux colinéaires structurés, p.ex. en matrice.

L'utilisation d'un périscope en association avec les dispositifs décrits ci-dessus permet de réduire significativement l'encombrement de l'ensemble.

Les dessins annexés illustrent l'invention :
La figure 1 représente, en perspective, le module source optique de base avec les dispositifs de réglages (vis, micro-vérin, piézoélectrique,...) orthogonaux à l'axe de propagation du faisceau.
La figure 2 représente, en coupe, le module source optique de base avec les dispositifs de réglages (vis, micro-vérin, piézoélectrique,...) orthogonaux à l'axe de propagation du faisceau.
La figure 3 représente, en perspective, une variante du module source optique de base avec les dispositifs de réglages (vis, micro-vérin, piézoélectrique,...) parallèles à l'axe de propagation du faisceau
La figure 4 représente, en coupe, la variante du module source optique de base avec les dispositifs de réglages (vis, micro-vérin, piézoélectrique,...) parallèles à l'axe de propagation du faisceau.
La figure 5 représente, en coupe, différentes solutions possibles pour la réalisation d'un dispositif de rotule (p.ex. cintré, mobile, flexible).
La figure 6 représente, en perspective, des dispositifs vis, micro-vérin, piézoélectrique permettant le réglage statique ou dynamique des modules sources optiques.
La figure 7 représente, en coupe, une variante d'une source de lumière compacte comportant une ou plusieurs fibres optiques pour déporter le générateur de lumière.
La figure 8 représente, en perspective, différentes architectures possibles de matrice de fibres pouvant être insérées dans la canule du dispositif de source optique compacte.
La figure 9 représente, en coupe, un dispositif de source laser avec une fonction d'ajustement statique ou dynamique.
La figure 10 représente, en coupe, un générateur de pixels colorés composé d'un certain nombre de modules sources optiques de base, p.ex. trois, un pour chaque couleur de base rouge, vert, bleu.
La figure 11 représente, en coupe, une variante possible de l'architecture du générateur de pixels colorés.
La figure 12 représente, en coupe, une autre variante possible de l'architecture du générateur de pixels colorés.
La figure 13 représente, en coupe, l'architecture d'un périscope, permettant la déviation d'une matrice de faisceaux parallèles, utilisable au sein d'un moteur de projection vidéo numérique à base de disques optiques rotatifs.
La figure 14 représente, en coupe, une variante possible de l'architecture du périscope de la figure 13 avec une tête matricielle pour la source du moteur de projection numérique multifaisceaux.
La figure 15 représente, en coupe, une autre variante possible de l'architecture du périscope de la figure 13 et 14.
La figure 16 représente, en coupe, d'autres variantes possibles de l'architecture du périscope de la figure 13 et 14.
La figure 17 représente, en coupe, une variante du premier miroir et/ou filtre du périscope de déviation.
La figure 18 représente, en perspective, un arrangement en escalier d'un certain nombre de modules sources.
La figure 19 représente, en perspective, des arrangements en quinconce, en "V" et
"V inversé" d'un certain nombre de modules sources
La figure 20 représente, en perspective, une tête matricielle optique de moteur de projection vidéo à faisceau composée d'un dispositif pyramidale support de facettes réfléchissantes, d'anneaux et de modules sources optiques.
La figure 21 représente, en vue de dessus, le premier étage d'une tête matricielle optique de moteur de projection vidéo à faisceau composée d'un dispositif pyramidale support de facettes réfléchissantes, d'anneaux et de modules sources optiques.
La figure 22 représente, en coupe, une tête matricielle optique de moteur de projection vidéo à faisceau composée d'un dispositif pyramidale support de facettes réfléchissantes, d'anneaux et de modules sources optiques.
La figure 23 représente, en perspective, le support de surfaces réfléchissantes pour la tête matricielle de la figure 20.
La figure 24 représente, en coupe, une variante de la tête matricielle pour projecteur vidéo numérique multifaisceaux composée de plusieurs pyramides de déviation.
La figure 25 représente, en coupe, une vue simplifiée de plusieurs arrangements possibles des pyramides sur de la figure 22.
La figure 26 représente, en coupe, l'orientation des modules sources possible pour la tête matricielle.
La figure 27 représente, en perspective, un dispositif de réglage d'assiette composé de vis, micro-vérin, piézoélectrique,... pouvant être adapté sur différents éléments d'un équipement de vidéo projection numérique multifaisceaux.
La figure 28 représente, en perspective et en coupe, un dispositif de protection pour la pyramide d'une tête matricielle de projection vidéo numérique.
La figure 29 représente, en perspective, plusieurs exemples d'assemblage du dispositif de protection de la pyramide de la tête optique matricielle figure 26.
La figure 30 représente, en vue éclatée, les parties constituantes possibles d'un disque optique rotatif, pour projecteur vidéo numérique multifaisceaux, composé de secteurs, pistes, barrettes et cavités.
La figure 31 représente, en coupe, un disque optique rotatif avec chaque piste ayant une hauteur différente.
La figure 32 représente, en perspective, un dispositif de réglage de l'orientation des facettes dans une cavité ainsi que différents moyens de maintien dans celle-ci.

### Module Source Optique :

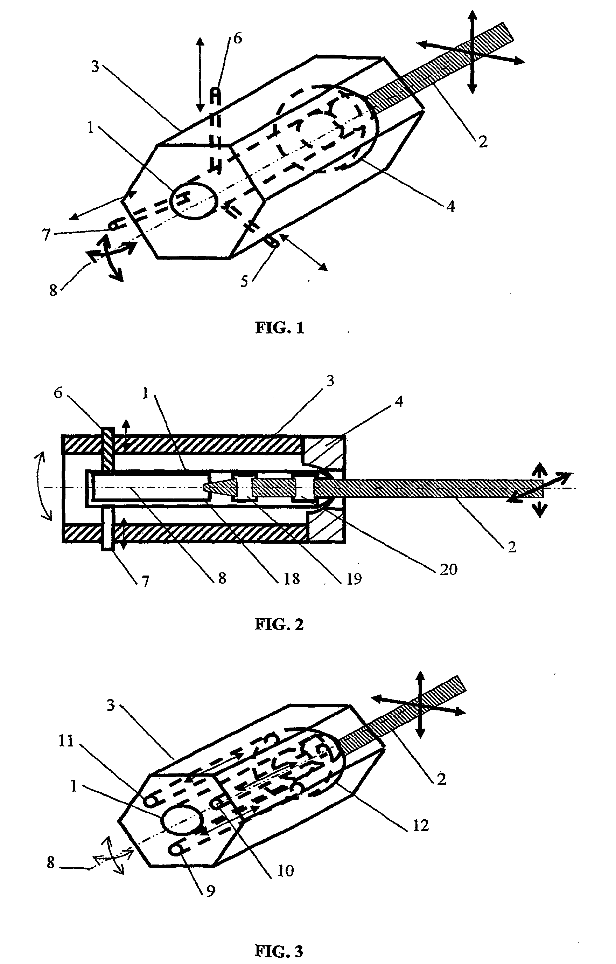

En référence à ces dessins, le dispositif de module source optique, en vue de perspective (FIG. 1) et de coupe (FIG. 2), est composé d'une source optique insérée dans une canule (1) générant un faisceau lumineux (2), d'un boîtier (3), p.ex. de forme hexagonale, servant de support à un dispositif de rotule (4), complété de trois dispositifs de correction (5), (6), et (7), positionnés perpendiculairement à l'axe de propagation (8). Le dispositif de rotule (4) est réalisé p.ex. à l'extrémité de la canule (1) par une tête ou un embout sphérique, percé en son centre pour laisser passer le faisceau (2), logé dans une cavité partiellement sphérique légèrement plus grande, également percée en son centre pour laisser passer le faisceau (2). Chacun des dispositifs de correction (5), (6), et (7) imprime un mouvement de translation à l'arrière de la canule, la combinaison des mouvements donne alors un mouvement sur deux axes à la canule (1). Ce mouvement de pivotement sur deux axes transmis à la canule (1) implique une modification de l'axe de propagation (8) du faisceau lumineux (2).

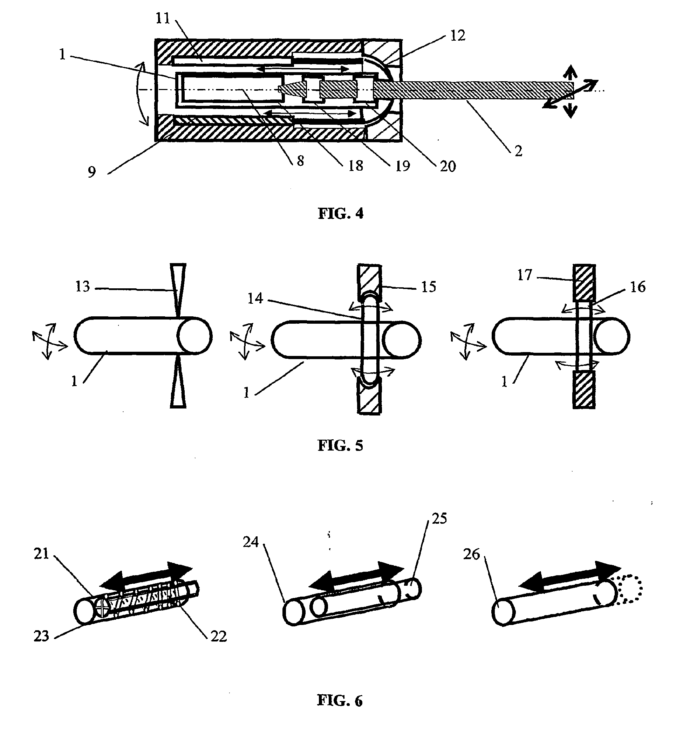

En fonction des contraintes d'encombrement et/ou de réalisation, une seconde implémentation des dispositifs de correction (5), (6), et (7) dans le sens de l'axe de la canule (1) est possible, ceci est représenté en vue de perspective (FIG. 3) et en vue de coupe (FIG. 4) par les dispositifs (9), (10), et (11). Le mouvement de pivotement sur deux axes est alors transmis par une rotule (12) composés p.ex. de deux éléments sphériques : un en extrémité de la canule (1) l'autre dans le support. Les deux éléments sphériques étant perforés au centre de façon à laisser passer le faisceau lumineux (2).

Plusieurs variantes (FIG. 5) du dispositif de pivotement, ou rotule, peuvent être utilisées dans le module source. Celui-ci, en extrémité ou sur le pourtour de la canule (1) peut être, p.ex., un cintrage (13), une bague arrondie (14) dans un support (15), ou une bague flexible (16) dans un support rigide (17).

La canule (1) intégrant la source optique (18), p.ex. de type diode Laser, diode ultra électroluminescente, fibre optique ..., peut selon les configurations contenir un certain nombre d'éléments optiques, p.ex. deux lentilles (19) et (20), réalisant la focalisation ou la collimation du faisceau émergeant (2) selon l'axe longitudinal de la canule (1). Ainsi tout mouvement sur la canule se répercute sur la direction de l'axe de propagation du faisceau lumineux.

Les dispositifs de correction (FIG. 6) utilisés dans les modules sources sont, en fonction de l'application visée, de la précision et de la vitesse de modification désirées, de type vis (21) avec ressort (22) dans une petite canule (23), des micro-vérins (24) et (25), ou bien des modules piézoélectriques (26) ayant la propriété de s'allonger sous l'effet d'un champ électrique.

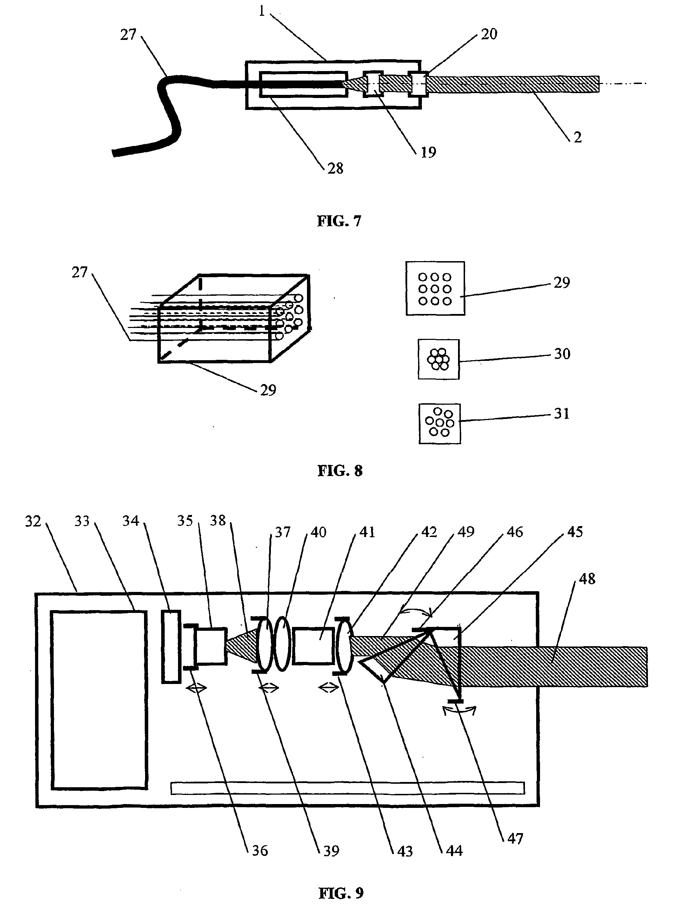

En fonction des contraintes d'encombrements, ou des disponibilités des différentes sources optiques aux longueurs d'ondes désirées, il est possible d'utiliser pour les modules sources optiques (FIG. 7) une fibre optique (27) dans une férule de positionnement (28) insérée dans la canule (1) permettant de réduire la taille de celle-ci en déportant la source. Au besoin un système de focalisation ou collimateur (19) et (20) pourra s'avérer nécessaire pour reformer le faisceau divergent en sortie de fibre. Toute solution de focalisation en sortie de fibre optique est utilisable dans ce cas.

Il peut également (FIG. 8) être utilisé dans les canules intégrant la source, un groupe de fibres optiques (27) structurées sous forme de matrice p.ex. carrée, rectangulaire (29) ou circulaire (30). Les fibres optiques, ou matrice, étant complétées ou non d'optique de focalisation en sortie de fibre. Dans le cas de l'utilisation d'un groupe de fibres optiques, celles-ci pourront être collées (30) les unes aux autres ou réparties (31) de façon équidistantes ou non.

Un autre mode de réalisation possible est l'intégration dans la canule d'une source laser avec fonction d'ajustement dynamique (FIG. 9) comprenant dans son boîtier (32) : un module de contrôle électronique (33); un dispositif de régulation en température (34) p.ex. de type Peltier; d'une diode laser (35) montée sur un dispositif de correction (36), p.ex. de type vis, micro-vérin, piézoélectrique...; d'une optique de collimation (37), du faisceau (38), montée sur un dispositif de correction (39), p.ex. de type vis, micro-vérin, piézoélectrique...; d'un dispositif (40), (41) et (42) de modification d'une ou de plusieurs combinaisons des caractéristiques physiques du faisceau, p.ex. le doublement de la longueur d'onde, composé d'un cristal doubleur (41) et d'une lentille de couplage, en entrée (40) et en sortie (42), montée sur un dispositif de correction (43), p.ex. de type vis, micro-vérin, piézoélectrique...; d'une paire de prismes (44) et (45) montés sur des dispositifs de correction (46), (47), p.ex. de type vis, micro-vérin, piézoélectrique... permettant un ajustement dynamique de l'ellipticité du faisceau (48) par élargissement du faisceau (49) selon un axe.

### Générateur de faisceaux de Pixels Colorés :

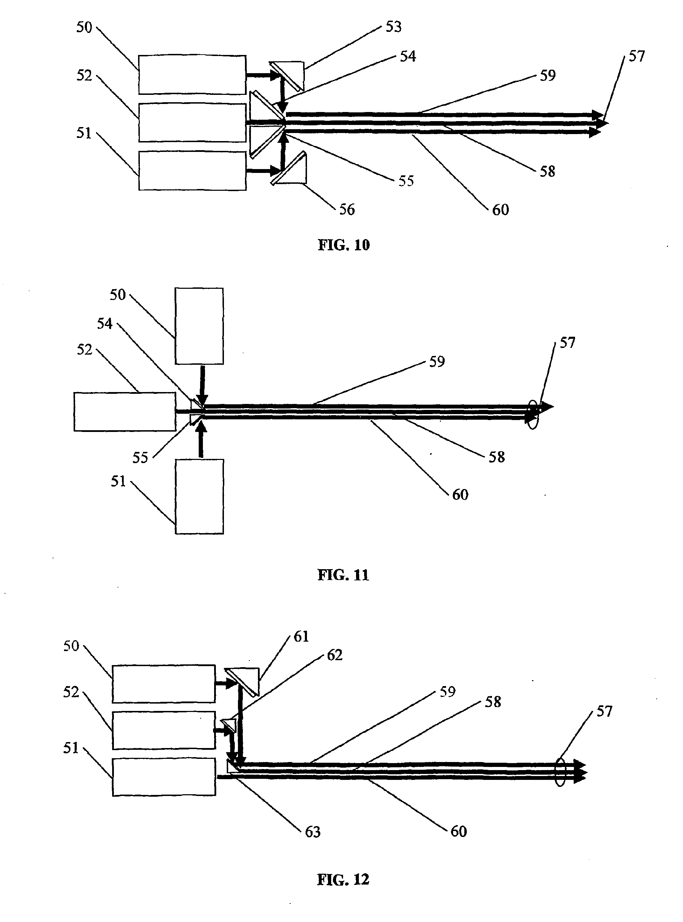

L'association de plusieurs modules sources optiques (FIG. 10) générant un faisceau de couleurs différentes, p.ex. Rouge (50), Vert (51) et Bleu (52), et de plusieurs miroirs et/ou filtres, p.ex. (53), (54), (55) et (56) permet la création d'un module source de faisceau coloré (57) par une série de réflexions successives. Parmi les modes de réalisations possibles, un premier module source (52) envoie directement un faisceau (58) vers le point cible (57), ce faisceau représente alors l'axe de propagation principal du générateur de faisceau coloré. Un second module source (50), positionné au dessus et parallèlement au premier (52), génère un faisceau (59) colinéaire, superposé ou non au faisceau (58), par l'intermédiaire d'une première réflexion sur le miroir et/ou filtre (53). Celui-ci dévie le faisceau (59) perpendiculairement en direction de l'axe principal. Une seconde réflexion sur un miroir et/ou filtre (54) réfléchit alors le faisceau selon l'axe de propagation principal (58). Un troisième module source (51), positionné au dessous et parallèlement au premier (52), génère un faisceau (60) colinéaire, superposé ou non au faisceau (58). Par l'intermédiaire d'une première réflexion sur le miroir et/ou filtre (56), le faisceau (60) est dévié perpendiculairement vers l'axe principal, puis une seconde réflexion sur un miroir et/ou filtre (55) réfléchit alors le faisceau selon l'axe de propagation principal.

Selon les contraintes de réalisation et d'encombrement, l'architecture du générateur de faisceau coloré peut varier comme le montre p.ex. les (FIG. 11) et (FIG. 12), où les trois modules sources optiques (50), (51) et (52), sont sur un même plan (FIG. 11) mais placés à un angle quelconque, p.ex. 90°. Les deux miroirs et/ou filtres (54) et (55), placés selon un angle, p.ex. à 45°, permettent de renvoyer les trois faisceaux (58), (59) et (60) dans la même direction vers la cible (57). Dans le cas de la (FIG. 12), les trois modules sources (50), (51) et (52) sont superposés mais n'utilisent que trois miroirs et/ou filtres (61), (62) et (63) de repliement pour rendre les faisceaux (58), (59) et (60) colinéaires ou très faiblement divergents.

Les miroirs et/ou filtres utilisés pourront au besoin être des miroirs et/ou filtres de type passif, p.ex. dépôt d'un couche métallique sur un substrat, ou de type actif, c'est-à-dire réfléchir le faisceau en modifiant une ou plusieurs de ces caractéristiques physiques, p.ex. sa géométrie grâce à une matrice DLP. L'ensemble des miroirs et/ou filtres des générateurs de faisceaux colorés pourra être constitué, p.ex. de LCD réflectifs, micro-lamelles, micro-miroirs ou tout autres dispositifs actifs permettant de dévier un faisceau.

De même les miroirs et/ou filtres composant le générateur de faisceau coloré pourront être montés sur des dispositifs de correction dynamique de type vis, micro-vérin, piézoélectrique,... permettant de réaliser un réglage dynamique du pointé des différents faisceaux composant le module.

### Périscope:

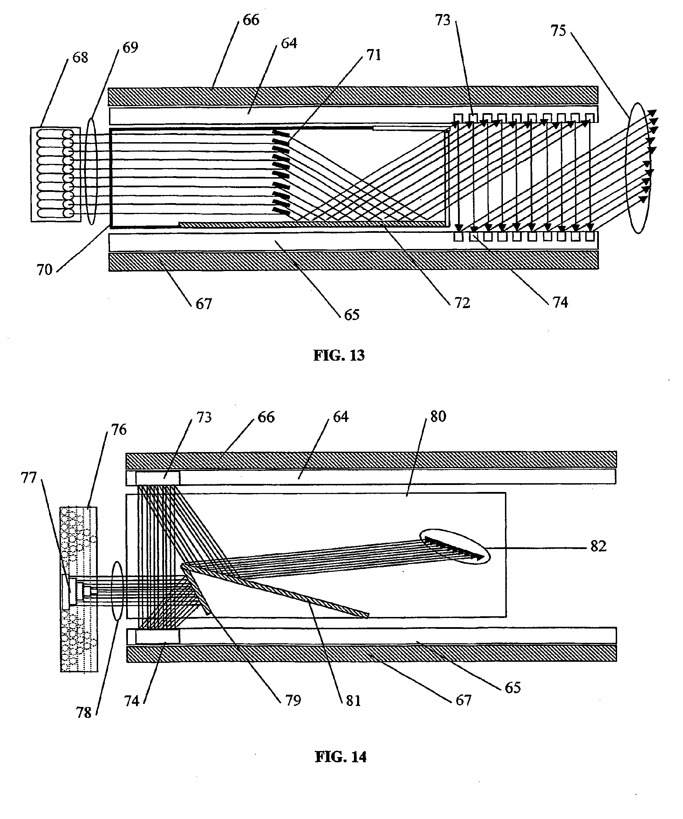

Dans un moteur de vidéo projection numérique multifaisceaux (FIG. 13), pour des raisons de performance et de réduction d'encombrement, il est possible de réduire l'espace entre les deux disques (64) et (65) sur leurs supports respectifs (66) et (67). De même il peut s'avérer judicieux de multiplier et structurer le nombre de sources pour éclairer p.ex. les différentes pistes.

Une implémentation possible du moteur de vidéo projection numérique multifaisceaux est d'utiliser une barrette de sources (68), composée p.ex. d'un certain nombre de modules sources, permettant de générer un peigne d'un certain nombre de faisceaux colinéaires (69). Ce peigne source attaque ensuite le premier disque optique rotatif (64) à l'aide d'un périscope de déviation (70) composé d'un certain nombre de miroirs et/ou filtres (71) et d'un miroir et/ou filtre de repliement (72). Dans ce type d'architecture, le faisceau issu d'une source est tout d'abord réfléchi par un premier miroir et/ou filtre (71), ensuite il subit une réflexion sur un miroir et/ou filtre de repliement (72), permettant de rallonger le trajet dans un faible encombrement, puis arrive sur la facette réfléchissante (73) du premier disque optique rotatif. Le faisceau lumineux est alors réfléchi avec un angle vertical imposé par l'orientation du miroir et/ou filtre (73) pour ensuite être dévié par la facette (74) du second disque (65) lui imposant alors un angle de déviation horizontal en sortie (75).

Une variante possible (FIG. 14) de l'architecture précédente est de remplacer un module source par une tête matricielle (76) générant, avec un dispositif (77) de forme pyramidale, une matrice de faisceaux lumineux colinéaires (78) attaquant le miroir et/ou filtre primaire (79) d'un périscope de déviation (80), puis dans forure : la facette réfléchissante (74) du premier disque (65), la facette (73) du second disque (64) et le miroir et/ou filtre secondaire (81) du périscope (80). A un instant "t" tous les faisceaux de la matrice d'entrée (78) subissent alors les mêmes déviations verticale et horizontale sans en modifier leur colinéarité en sortie (82).

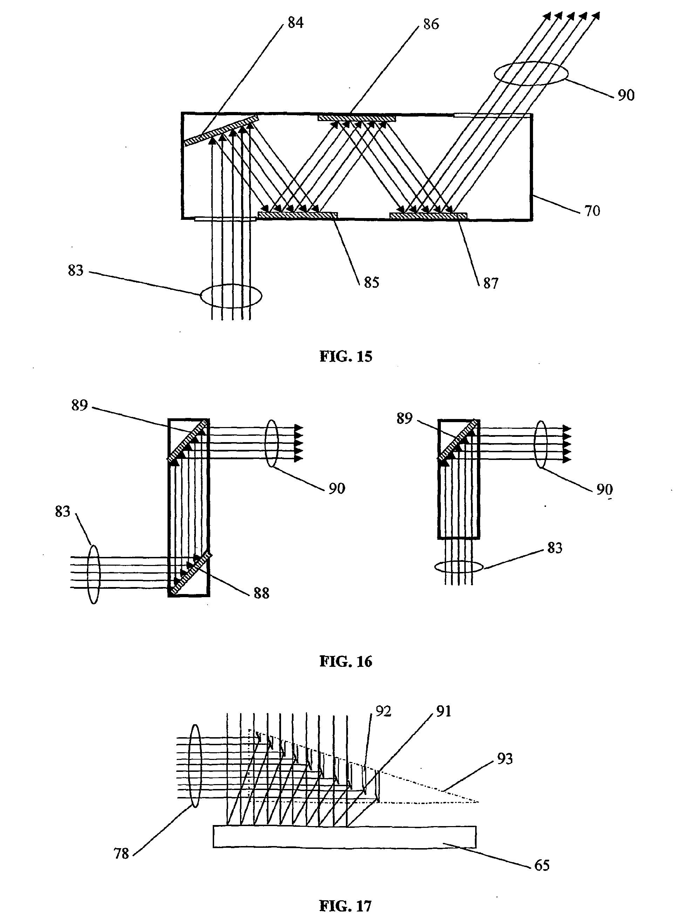

D'autres variantes de périscopes sont possibles, (FIG. 15) et (FIG. 16), permettant de changer la direction de propagation d'une matrice de faisceaux colinéaires (83) à l'aide d'un certain nombre de miroirs et/ou filtres (84), (85), (86), (87), (88) et (89). Les faisceaux de sortie (90) conservant leur colinéarité après le passage dans le périscope.

Une variante plus compacte (FIG. 17) du miroir et/ou filtre d'entrée du périscope permet de limiter l'espace entre les deux disques et limite le trajet des faisceaux lumineux. Le miroir et/ou filtre primaire est réalisé avec un certain nombre de miroirs et/ou filtres de très petite taille (91) positionnés sur des supports (92) régulièrement espacés. Un dispositif support (93) permet de les maintenir en marches d'escalier. Chaque faisceau issu du groupe de faisceaux (78) est donc dévié par un miroir et/ou filtre (91) vers les facettes du premier disque qui le dirige verticalement vers le deuxième disque. L'espacement entre les petits miroirs et/ou filtres (91) permet le passage du faisceau entre les deux disques.

Afin de pouvoir réaliser un réglage statique ou dynamique, l'ensemble des miroirs et/ou filtres du périscope pourra être monté sur des dispositifs de corrections de type vis, micro-vérin, piézoélectrique, ou tout autre dispositif de correction dynamique contrôlé.

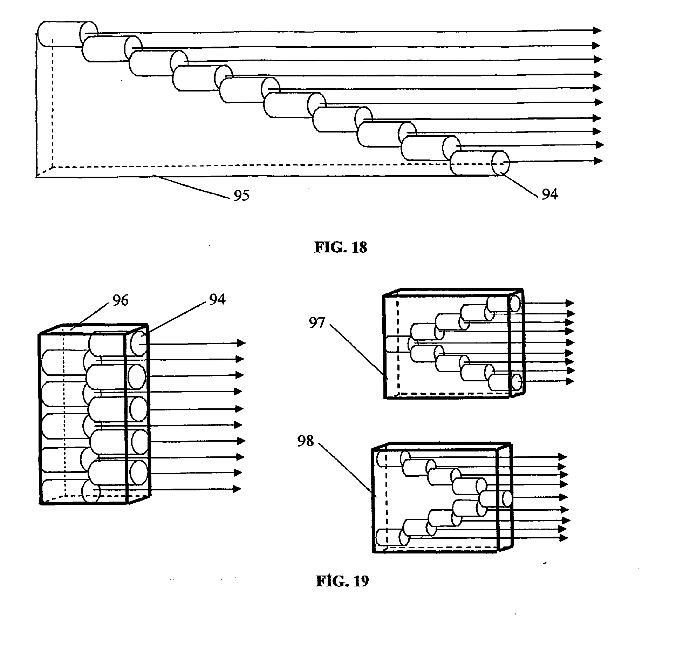

Pour pouvoir réaliser simplement l'adressage, p.ex. des différentes pistes des disques optiques rotatifs tout en minimisant l'espace entre eux, l'on utilise un périscope alimenté par un certain nombre de sources. Différents assemblages de sources sont envisageables selon les configurations : p.ex. en marches d'escalier (FIG. 18), où chaque module source (94) est positionné sur un support (95) comportant des marches permettant la réduction de l'espace entre les différents faisceaux, se traduisant par un gain en hauteur sur l'encombrement de l'ensemble des modules sources. Une alternative (FIG. 19) est l'implantation des modules sources selon une autre géométrie, p.ex. en quinconce (96), en forme de "V" (97) ou de "V inversé" (98), réduisant ainsi la profondeur du bloc de modules sources.

Les blocs sources pourront, si la technologie permet une intégration suffisante, être équipés d'un module source, d'un générateur de faisceau coloré ou encore d'une tête matricielle de projecteur vidéo numérique multifaisceaux.

### Tête matricielle optique :

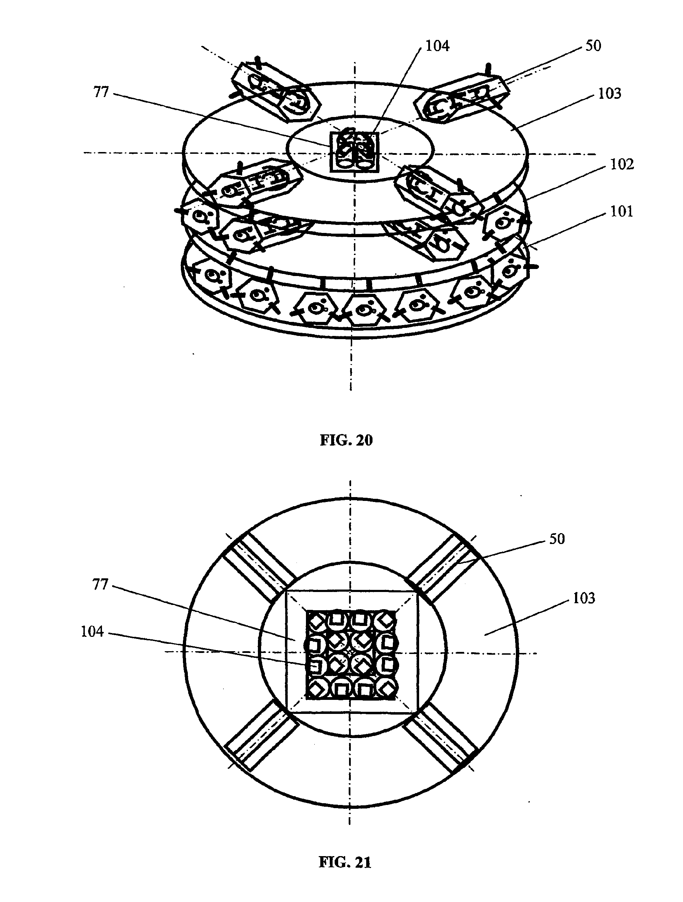

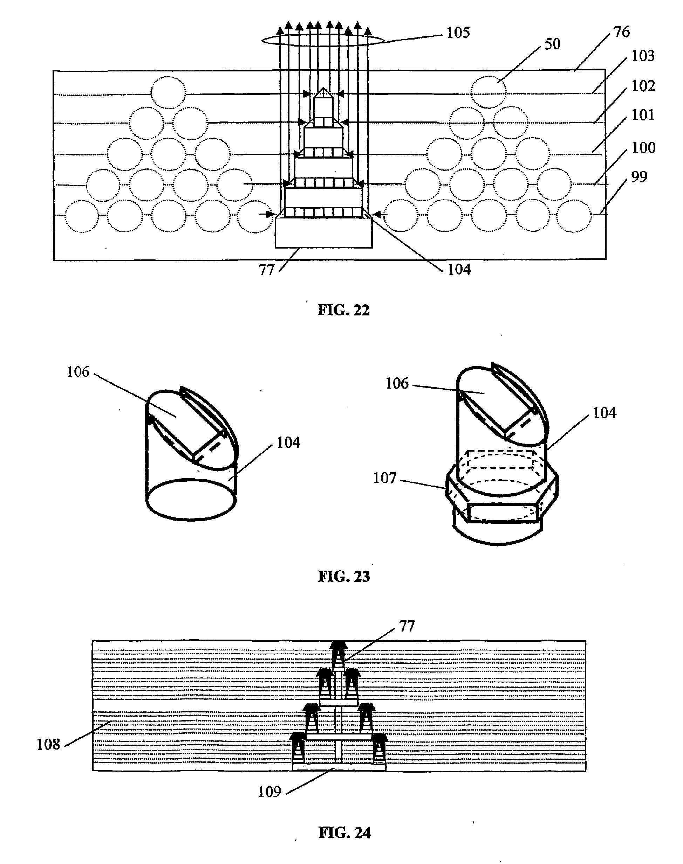

La tête matricielle de projecteur vidéo numérique multifaisceaux (FIG. 20), (FIG. 21) et (FIG. 22) est composée d'un certain nombre d'anneaux, p.ex. (99), (100), (101), (102) et (103), sur chacun d'eux est disposé un certain nombre de modules sources (50), ou module générateur de faisceau coloré. Ceux-ci orientant les faisceaux vers des miroirs et/ou filtres (104) positionnés au centre des anneaux sur un support (77) p.ex. de forme pyramidale, conique, ou autre..., structurent les faisceaux de façon à les rendre colinéaires et à obtenir une matrice en sortie (105).

Les supports (FIG. 23) des miroirs et/ou filtres, composants du dispositif central de la tête matricielle sont, p.ex., de forme cylindrique (104) tronquée en biais selon un certain angle, p.ex. 45°, avec une petite cavité (106) permettant d'insérer un miroir et/ou filtre de faible dimension. Au besoin le support possédera un pourtour hexagonal (107) facilitant le positionnement et le réglage à l'aide d'un outil spécifique.

Pour augmenter la résolution et/ou réduire les contraintes mécaniques du moteur de projection vidéo numérique multifaisceaux, il est possible d'utiliser (FIG. 24) non plus une seule source ou une seule pyramide (77) mais un ensemble de pyramides qui peuvent être insérées au centre des couronnes ou anneaux (108) au moyen d'un arbre (109).

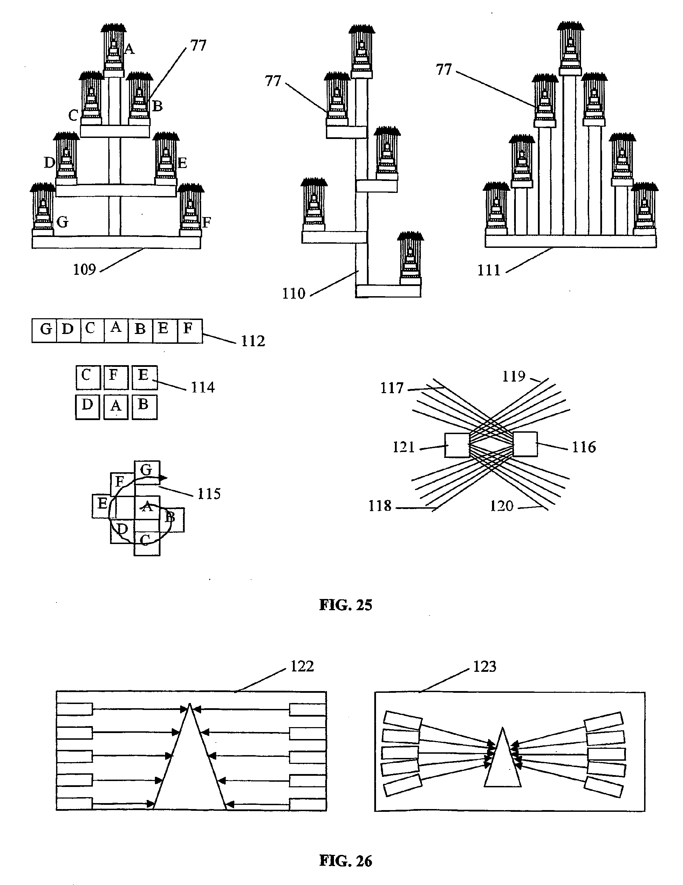

Plusieurs type d'implantations des pyramides sur les arbres sont possibles (FIG. 25). P.ex. en forme de "sapin de noël", les pyramides sont maintenues en place par un support (109) plein ou composé de très fines tiges rigides. Les solutions envisagées peuvent ne pas être symétriques (110) ou toutes reliées à la base (111).

Pour ces implantations, il faut tenir compte des contraintes de dimension et du nombre de faisceaux arrivant sur les éléments pyramidaux qui seront placés sur un même plan, p.ex. en ligne (112), ou répartis dans l'espace, p.ex. (114) ou (115). En effet selon les dimensions de la pyramide, et du nombre de faisceaux arrivant sur les facettes réfléchissantes en vis-à-vis de deux pyramides positionnées au même niveau, p.ex. (116) et (121), l'espace entre les deux éléments doit permettre de laisser passer, avec un angle pas trop important, l'ensemble des faisceaux (117), (118) pour la pyramide (116) et (119), (120) pour la pyramide (121). Pour éviter ce problème, les pyramides peuvent être positionnées sur des niveaux différents et/ou réparties dans l'espace de façon régulière. Le but étant d'obtenir une matrice de faisceaux parallèles régulièrement espacés en sortie. Il est ainsi possible d'obtenir (FIG. 25) une architecture (114) en trois dimensions où les lettres majuscules représentent chacune un élément pyramidal Cela permet d'avoir deux pyramides, p.ex. repérées C et B, sur un même niveau mais ne présentant pas de faces en vis-à-vis. Une solution de répartition en spirale (115) permet également d'éviter les problèmes d'adressage.

L'implantation des modules sources sur les anneaux de la tête matricielle pour projecteur vidéo numérique multifaisceaux peut être organisée de différentes façons (FIG. 26) en fonction des contraintes d'encombrement et/ou de la taille et de la forme du dispositif pyramidal central. Si la taille des modules sources et la différence de hauteur entre les facettes réfléchissantes de la pyramide sont identiques, chaque anneau est positionné de façon à ce que les faisceaux issus des modules sources soient dans le même plan que l'étage de la pyramide (122). Une autre possibilité est que les modules sources d'un anneau peuvent adresser un élément de la pyramide à un niveau supérieur ou inférieur (123).

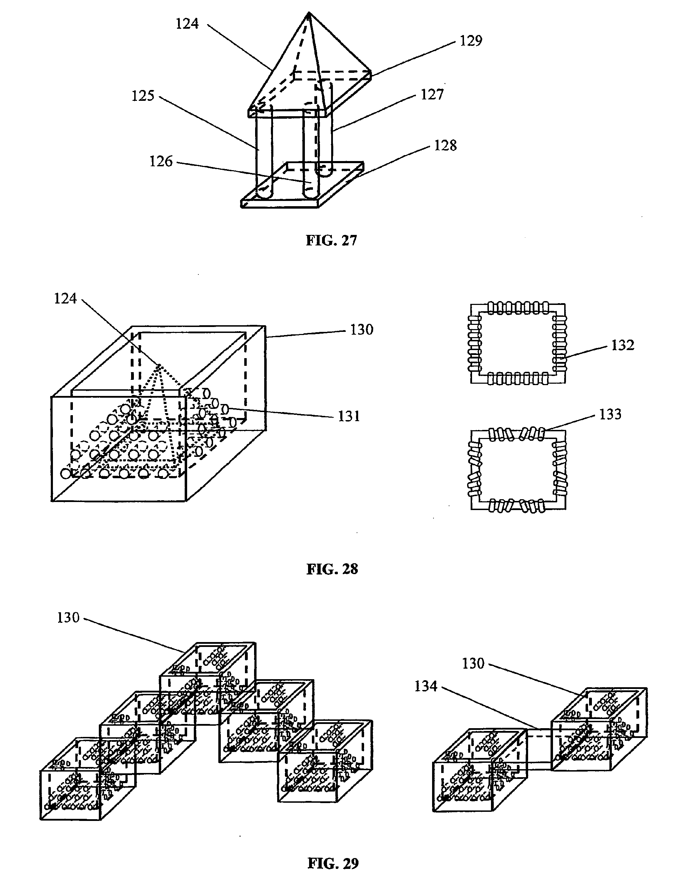

Il peut s'avérer nécessaire pour des raisons de stabilité du système, ou à des fins de corrections dynamiques, d'utiliser sur la pyramide un support intégrant un réglage d'assiette (FIG. 27). Ce dispositif de correction de l'assiette, p.ex. de la pyramide (124), est composé p.ex. de trois éléments (125), (126), (127) de type vis, micro-vérin piézoélectrique,... disposés selon un triangle isocèle entre une base (128) et un socle (129) de maintien de la pyramidé (124). La commande électronique rapide des trois dispositifs impose une très faible correction d'assiette.

La taille du dispositif pyramidale positionné au centre des anneaux de la tête optique matricielle pour projecteur vidéo numérique multifaisceaux étant assez faible, il est possible de la placer à l'intérieur d'un dispositif de protection (FIG. 28). Celui-ci est p.ex. un cube creux (130) réalisé en matière transparente ou muni de trous (131) rigoureusement orientés selon l'axe de propagation des faisceaux incidents sur chacune des facettes de la pyramide (124), p.ex. rigoureusement parallèles (132) ou avec un angle (133).

Ces différents cubes de protection peuvent être utilisés pour construire les "arbres" de pyramides (FIG. 29) avec un dispositif (134) support supplémentaire ou non.

### Disques optiques rotatifs :

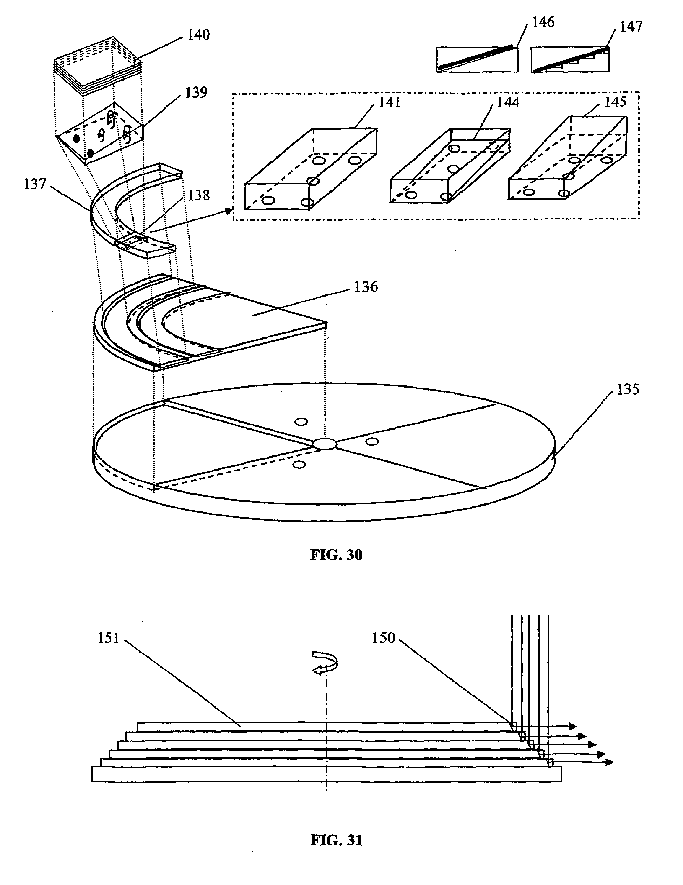

Selon les variantes de réalisations, les disques optiques rotatifs du moteur de vidéo projecteur numérique multifaisceaux pourront être composés d'un certain nombre d'éléments ou dispositifs "enclipsables" et/ou solidaires les uns aux autres. P.ex. (FIG. 30) le disque (135) est composé de quatre secteurs (136) eux mêmes composés de deux pistes (137) sur lesquels sont réalisés un certains nombres de cavités (138) accueillant des supports (139), ou cales, orientant les miroirs/filtres (140) composés p.ex. d'un substrat et d'un empilement de couche métallique et de couche de protection.

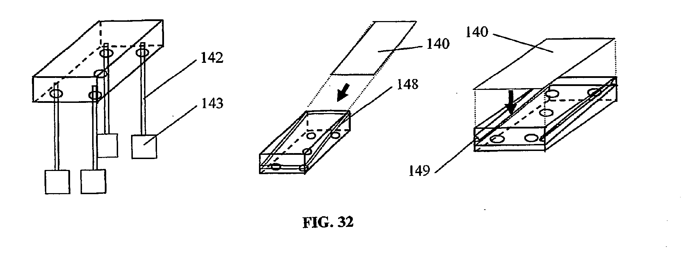

Les cavités (138) sont, selon les moyens de fabrications, planes (141) avec un certain nombre de trous permettant (FIG. 32), à l'aide d'aiguilles (142) montées sur des platines de translation micrométrique (143), d'orienter les miroirs/filtres avant d'être scellés p.ex. au moyen d'une colle.

Une autre possibilité d'orienter les facettes réfléchissantes dans les cavités est de réaliser un plan incliné dans la masse (144) ou en surface (145) directement lors de la réalisation du disque p.ex. par procédé de lithographie. Selon la précision de la réalisation les pentes seront alors lisses (146) ou sous forme d'une succession de marches (147). La facette réfléchissante est alors maintenue en place par procédé de collage p.ex. par l'injection d'une résine dans les trous pratiqués en fond de la cavité.

Une autre variante (FIG. 32) de réalisation du positionnement des facettes est l'utilisation de fentes dans les tranches de la cavité (148). La facette (140) est alors positionnée par glissement dans ces fentes dont la taille est ajustée à l'épaisseur de la facette lui imposant une orientation, un scellement est réalisé ensuite pour éviter tout mouvement.

Selon le même principe un positionnement de la facette peut se faire par "clipsage" sur des rainures (149) réalisées avec une certaine souplesse sur le pourtour de la cavité. La facette (140) est alors positionnée en force dans le fond de la cavité qui lui impose son orientation.

En fonction des applications et/ou de la puissance des faisceaux utilisés sur les miroirs/filtres, il peut s'avérer nécessaire de nettoyer et régénérer la surface réfléchissante (140). Celle-ci peut, p.ex., être réalisée avec un empilement d'un certain nombre de couches réfléchissantes et de couches de protection. Lorsque la surface réfléchissante est devenue sale ou déformée, un procédé de nettoyage, p.ex. une réaction chimique, un laser pulsé. élimine la couche de protection pour révéler la couche réfléchissante inférieure. Ce procédé de réfection automatique permet de présenter une surface orientée comme la précédente évitant ainsi une maintenance coûteuse sur le disque optique rotatif pour moteur de projection vidéo numérique multifaisceaux.

Une variante (FIG. 31) du disque est envisagée dans laquelle les différentes pistes de facettes réfléchissantes (150), composées ou non de barrettes (137) secteurs (136), sont à des hauteurs différentes (151). Le disque peut alors être adressé par la tranche.

Le positionnement du disque sur les moteurs peut être fait p.ex. par trois trous répartis p.ex. à 120° ainsi qu'un trou central pour le maintenir sur l'arbre moteur.

L'ensemble des dispositifs décris dans ce document sont destinés dans un premier temps pour des applications dans le domaine de la vidéo projection pour le Cinéma Numérique de 2^{ème} génération.

## Revendications

1. Dispositif de moteur de vidéo projection numérique multifaisceaux comportant un bloc d'émission (68), **caractérisé en ce qu'**il comporte un certain nombre de disques optiques rotatifs superposés (64) et (65), comportant eux-mêmes un arrangement déterminé de miroirs et/ou de filtres ainsi la déviation d'un ensemble de faisceaux incidents parallèles (69) issu du dit bloc d'émission (68) constitué d'un certain nombre de modules sources et/ou d'un certain nombre de têtes matricielles (76), le dit bloc comportant un certain nombre de modules sources optiques, de générateurs de faisceaux colorés, ou de pyramides de renvoi (77), la déviation étant orientée p.ex. dans le sens vertical pat le premier disque optique rotatif et dans le sens horizontal par le second, et comportant en sus un dispositif de périscope optique de déviation (70), (80), pourvu de deux miroirs et/ou de filtres formant un prisme réfléchissant (79) et (81), ou bien même, selon une autre configuration, d'un certain nombre de miroirs et/ou de filtres, (71) et d'un miroir et/ou filtre de repliement (72), permettant d'attaquer le premier disque avec un angle prédéterminé autorisant un faible encombrement.

2. Dispositif selon la revendication 1 **caractérisé en ce qu'**il comporte en amont une Tête Matricielle Optique, comportant elle-même un certain nombre d'étages d'anneaux (99), (100), (101), (102) et (103), sur lesquels sont disposées, de façon à éviter les croisements des - faisceaux, un certain nombre de modules sources optiques (50) orientés vers le centre de chaque anneau, de façon à dévier chaque faisceau vers des miroirs et/ou filtres (104), eux mêmes régulièrement positionnés sur un dispositif central de support ou taillés dans la masse du support, le dit support Possédant une forme pyramidale (77), conique ou autre, sur lequel chaque miroir et/ou filtre (104) est orienté de façon à assurer la colinéarité des faisceaux émergeant (105) en sortie du dispositif.

3. Dispositif selon la revendication 2 **caractérisé en ce que** ce que le support (104) des miroirs et/ou des filtres est p.ex de forme cylindrique tronqué de biais selon un angle déterminé de façon à orienter spécifiquement chaque faisceau incident, la face tronquée comportant une cavité (106) ajustée à la taille du miroir et/ou du filtre, le dit support pouvant être pourvu en variante d'un élément hexagonal (107) intercalé sous sur la base pour en faciliter l'orientation dans la phase de fabrication et de réglage.

4. Dispositif selon la revendication 2 **caractérisé en ce que** le dispositif pyramidal central de la tête matricielle optique pour vidéo projecteur numérique multifaisceaux, comporte un agencement (109) de plusieurs pyramides de déviation (77), permettant de densifier les faisceaux issus de cette tête matricielle optique, les dites pyramides étant fixées, selon les variantes, sur un arbre (109), (110), (111) composé de tiges très fines plates ou non, rigides, permettant d'éviter l'obstruction du passage des rayons lumineux issus d'un anneau de la tête matricielle optique.

5. Dispositif selon la revendication 2 **caractérisa en ce que** les modules sources optiques répartis sur chacun des anneaux de la tête matricielle optique associée à un moteur de vidéo projection numérique multifaisceaux, adressent le même étage (122) ou un certain nombre d'étages différents (123) de la pyramide de déviation optimisant ainsi l'encombrement de la tête matricielle optique.

6. Dispositif selon la revendication 2 **caractérisé en ce que** la tête matricielle optique pour vidéo projecteur numérique multifaisceaux comporte un mécanisme de correction d'assiette, inséré derrière celle-ci ou en-dessous de la pyramide centrale (124), (77) ou de tout autre élément selon les configurations de la tête matricielle optique, composé d'un certain nombre de dispositifs de type vis, micro-vérin, piézoélectrique, ou tout autres élément permettant de réaliser une translation contrôlée, disposés, entre un socle (128) et une base (129), permettant d'orienter les faisceaux nécessitant une correction d'assiette dynamo

7. Dispositif selon la revendication 2 **caractérisé en ce que** l'élément pyramidal de la tête matricielle optique pour vidéo projecteur numérique multifaisceaux est protégé par des parois (130) transparentes ou perforées (131) qui permettent le passage des faisceaux issus des modules sources vers les miroirs et/ou filtres du dispositif (124). Selon les variantes, un certain nombre de dispositifs de protection (130) leur permet de s'emboîter les uns aux autres pour composer l'arborescence des pyramides selon la revendication 9 avec ou sans l'aide d'une plaque intermédiaire (131).

8. Dispositif selon la revendication 1 **caractérisé en ce que** chaque disque optique rotatifs (135) pour moteur de vidéo projection numérique multifaisceaux comporte des cavités (138) de logement de facettes réfléchissantes et, en son centre, un certain nombre de trous de fixations, répartis à 120°, avec ou non un trou de positionnement central, le disque en question pouvant être composé d'un certain nombre de secteurs (136), amovibles ou non, eux-mêmes composés d'un certain nombré de barrettes ou d'arcs (137), amovibles ou non, sur lesquels est réalisé un certain nombre de cavités (138), qui comportent elles-mêmes un certain nombre de trous au travers des différents composants du disque, pour ajuster et/ou sceller les miroirs et/ou filtres, et qui permettent de loger les facettes réfléchissantes (140), en contact direct ou par le biais de porte facette (139), qui, selon les variantes du disque, sont orientées selon les angles imposés par le fond des cavités creusées dans la masse (144), ou en surface (145), déterminés par un plan (146) ou une succession de marches (147), et/ou déterminés à l'aide d'un support s'insérant dans la cavité (139). Les différents secteurs et/ou barrettes sont encastrables les uns dans les autres, ou superposés les uns sur les autres, permettant d'orienter des faisceaux lumineux incidents et/ou émergents sur la tranche de la piste.

9. Dispositif selon les revendications let 2 **caractérisé en ce que** la surface réfléchissante des miroirs et/ou des filtres est déposée sur un substrat par empilement d'un certain nombre de couches métalliques et de couches de protection qui peuvent être ultérieurement retirées une à une par un procédé chimique, laser, ultrason ou autre, afin de présenter à nouveau-une surface propre, ce qui introduit une fonction de réfection automatique ou non des surfaces. Une variante peut-être l'utilisation de surface réfléchissante "active" comme des DLP, LCD ou tout mitre procédé d'optique adaptative permettant de faire varier certaines caractéristiques du faisceau réfléchi comme p.ex. l'intensité lumineuse, la forme, permettant p.ex. une adaptation géométrique du faisceau.

10. Dispositif selon les revendications 8 et 9 **caractérisé en ce qu'**il comporte un système de positionnement des facettes réfléchissantes (140), réalisé selon les configurations possibles, par le biais de glissières (148) et/ou par un système de "clipsage" (149), ou bien encore à l'aide d'un certain nombre de dispositifs de maintien, traversant ou non le disque dans la masse, automatisés ou non, p.ex. des aiguilles (142) creuses ou pleines, ou des ventouses pneumatiques, ou des électro-aimants, fixés sur des platines de translation micrométriques, dont rajustement de la hauteur détermine une l'orientation angulaire spécifique de chaque facette, qui par la suite est scellée, p.ex par un procédé de collage.

11. Dispositif selon la revendication 1, **caractérisé en ce que** chaque module source optique, intégré ou non dans la tête matricielle optique qui assure la focalisation, le collimatage et la colinéarité des faisceaux, comporte une canule (1) intégrant une ou plusieurs sources optiques qui vont générer un ou plusieurs faisceaux collimatés, ou de très faible divergence, ces sources pouvant être des diodes ultra luminescentes, diodes laser, ou tout autre type de source lumineuse de faible encombrement, fibrées ou non, intégrées dans un dispositif (3), p.ex. de forme hexagonale, servant de support à l'avant pour un point de pivot ou rotule (4), et à l'amère pour un dispositifs permettant un ajustement de position sur les deux axes perpendiculaires à l'axe de propagation (8) du faisceau lumineux (2), grâce à un certain nombre de dispositifs de corrections, p.ex. trois (5), (6) et (7), réalisant un mouvement de translation.

12. Dispositif selon la revendication 1 et 11 **caractérisé en ce que** les dispositifs de correction de positionnement du module source optique, (9), (10) et (11), sont alignés selon l'axe de visée du module source optique et non perpendiculairement à celui-ci.

13. Dispositif selon les revendications 11 et 12 **caractérisé en ce que** le point de pivot, ou rotule, du module source optique est de type appui cintré (13), bague arrondie pivotant au sein d'une cage arrondie (14) et (15), bague en matériau souple (16) dans un support rigide (17) ou tout autre dispositif permettant à la canule, mobile selon les deux axes perpendiculaires à l'axe de visée du module source optique, de pivoter légèrement par rapport à ce dernier.

14. Dispositif selon la revendication 11 **caractérisé en ce que** les dispositifs de corrections (5), (6), (7), (9), (10) et (11) du module source optique, permettant l'orientation de l'axe de propagation du faisceau lumineux (8), sont statiques, p.ex. de type vis avec ressort (21), (22) et (23), ou dynamiques de type micro-vérin (24) et (25) ou piézoélectrique (26), ou tout autre dispositif permettant de réaliser une translation contrôlée en dynamique.

15. Dispositif selon les revendications 1 et 11 **caractérisé en ce que** la canule (1) du module source optique permet d'accueillir une ou plusieurs sources optiques (18), monochromatiques ou non, constituées chacune p.ex. d'un laser, d'une diode électroluminescente fibrée ou non, complété d'une combinaison de lentilles (19) et (20), ou de tout autre dispositif optique permettant la focalisation du faisceau de façon statique ou dynamique, à l'aide, éléments de type vis, micro-vérin ou piézoélectrique. Dans le cas p.ex d'une source fibrée (27) celle-ci peut être organisée en matrice de fibres optiques (29), contiguës ou non, selon un arrangements quelconque ou structuré, p.ex. en forme de matrice (29), de cercle (30) et (31), de spirale, de rosace, d'hélicoïde...

16. Dispositif selon les revendications 1 et 15 **caractérisé en ce que** le module source optique intègre une source laser avec fonction d'ajustement dynamique composée d'une diode laser (35), d'un dispositif de collimation (37), d'un dispositif de formation de faisceau (40), (42), (44), (45) comportant ou non un dispositif de décalage en longueur d'onde (41), qui peut être selon les applications remplacé et/ou complété, par un dispositif de modulation d'intensité lumineuse, p.ex. à base d'un cristal non linéaire, d'un polariseur ou de tout autre dispositif agissant sur une ou plusieurs caractéristiques physiques du faisceau lumineux, et **caractérisé** également **en ce que** cette source est pourvue d'un certain nombre de dispositifs dynamiques (36). (39), (43), (46), (47) p.ex. de type micro-vérin, piézoélectrique etc. permettent de faire varier les caractéristiques géométriques, p.ex. la taille, l'ellipticité, la puissance etc. du faisceau (48) en sortie du module, à l'aide d'une commande électronique rapide (33).

17. Dispositif selon les revendications 1 et 12 **caractérisé en ce qu'**il comporte, pour la génération d'un faisceau coloré à l'usage de la tête matricielle optique et/ou du moteur de vidéo projection numérique multifaisceaux, un certain nombre de dispositifs modules sources optiques, p.ex. (50), (51), et (52), ayant une longueur d'onde d'émission différente, p.ex. rouge, vert et bleu, et d'un certain nombre de miroirs et/ou filtres (53), (54), (55), (56), (61), (62) et (63) permettant la recombinaison d'un certain nombre de faisceaux distincts en un groupe d'un certain nombre de faisceaux parallèles superposés ou très proches les uns des autres dont la résultante est un faisceau coloré (57) dont le spectre dépend de la proportion de l'intensité lumineuse et de la longueurs d'onde de chacun des faisceaux, la direction du faisceau issu du générateur de faisceau coloré étant ajustable en statique ou dynamique à l'aide d'un certain nombre de dispositifs, p.ex. vis, micro-vérins, cellules piézoélectriques, ou tout autre élément permettant une légère modification de l'orientation des différents miroirs et/ou filtres composant le dispositif, dont une variante possible est l'utilisation d'un ou plusieurs cubes de recombinaisons classiques à la place des miroirs et/ou filtres (54) et (55).

18. Dispositif selon la revendication 1, **caractérisé en ce que** le périscope de déviation d'un certain nombre de faisceaux lumineux parallèles (83), issus d'une tête matricielle optique, ou d'un certain nombre de modules sources optiques, est pourvu d'un habitacle ou cache de protection (70) de forme parallélépipédique, ou cylindrique, creux ou réalisé dans la masse d'un matériau transparent pour les longueurs d'ondes considérées, complété d'un certain nombre de miroirs et/ou filtres (84), (85), (86), (87), (88) et (89), permettant par réflexions et/ou transmissions successives de modifier l'orientation de la direction de propagation d'un certain nombre de faisceaux lumineux parallèles sans modifier la colinéarité entre chacun d'entre eux, le miroir et/ou filtre en entrée du périscope de déviation étant réalisé p.ex avec un certain nombre de petits miroirs et/ou filtres sur des supports (92) maintenus en place par un support principal (93), p.ex. en forme de marches d'escalier et pouvant être monté sur des éléments de correction dynamique de type vis, micro-vérins, piézoélectrique...

19. Dispositif selon la revendication 1 **caractérisé en ce qu'**il comporte un agencement particulier de modules sources optique permettant de générer un groupe de faisceaux colinéaires dans un encombrement réduit, sans modification des caractéristiques ou propriétés intrinsèques des faisceaux, où cet agencement des modules sources (94) peut être selon les variantes, conçu suivant la forme de marches d'escalier (95), ou en quinconce (96], ou en forme de "V " (97) et (98), ou suivant tout autre arrangement géométrique permettant d'obtenir un groupe d'un certain nombre de faisceaux colinéaires régulièrement espacés dans un encombrement réduit.

## Claims

1. A multi-beam digital projection video motor device having an emission block (68), **characterized by** a certain number of superimposed optical rotating discs (64) and (65), comprising themselves a determined mirrors and/or filters layout, causing the deviation of a parallel incident beams (69) set from said emission block (68) constituted of a certain number of sources modules and/or a certain number of matrix heads (76), said block comprising a certain number of optical sources modules, coloured beams generators or deflection pyramids (77), said deflection being oriented for example vertically by the first optical rotating disc and horizontally by the second, and comprising in addition a deflection optical periscope device (70), (80) with two mirrors and/or filters constituting a reflective prism (79) and (81), or, according to another configuration, a certain number of mirrors and/or filters, (71) and a folding mirror and/or filter (72), allowing to attack the first disc with a predetermined angle introducing a low obstruction.

2. A device according to claim 1 **characterized by** an optical matrix head upstream, comprising itself a certain number of ring levels (99), (100), (101), (102) and (103), on which are positioned, to avoid beams intersections, a certain number of optical source modules (50) pointed towards the centre of each ring, in order to deflect each beam towards mirrors or filters (104), themselves tegularly placed on a support central device or sculptured in the support, said support having a pyramid (77), cone or other shape, on which each mirror or filter (104) is pointed to guarantee the colinearity of the beams (105) at the device output.

3. A device according to claim 2 **characterized by** a mirrors and/or filters support (104), said support is, for example cylinder shape, bias truncated according to a determined angle, in order to point specifically each incident beam, the truncated side comprising a cavity (106) adjusted to the mirror and/or filter size, the said support may have, as a variant, a hexagonal element inserted under the base to ease the orientation in the production and adjustment line.

4. A device according to claim 2 **characterized by** a central pyramid-shaped device of the optical matrix head for multi-beam digital video projector, which comprises a layout (109) of several deviation pyramids (77), allowing to make the beams from this optical matrix head denser, the said pyramids being fixed, according to the variants, on a shaft (109), (110), (111) composed of very thin stems, plane or not, rigid, allowing to avoid the obstruction of the passage of the light beams coming from a ring of the optical matrix head.

5. A device according to claim 2 **characterized by** optical source modules shared out on each ring of the optical matrix head associated to a multi-beam digital projection video motor, address the same level (122) or a certain number of different levels (123) of the deviation pyramid optimizing thus the optimal matrix head obstruction.

6. A device according to claim 2 **characterized by** optical matrix head for multi-beam digital video projector comprising a trim correction mechanism, inserted behind this one or below the central pyramid (124), (77) or any other element according to the optical matrix head configurations, composed of a certain number of devices, screw, micro-jack, piezoelectric type, or any other element allowing to achieve a controlled translation, disposed between a lower platform (12B) and a an upper platform (129), allowing to point beams requiring a dynamic trim correction.

7. A device according to claim 2 **characterized by** the pyramid-shaped element of the optical matrix head for multi-beam digital video projector which is protected by transparent or perforated (131) walls (130), which allow the passage of beams from the source modules towards the device mirrors or filters (124), where a certain number of protection devices (130) allows them to be stacked together to compose the pyramids arborescence according to claim 9 with or without the help of an intermediate plate (131).

8. A device according to claim 1 **characterized by** optical rotating discs (135) for multi-beam digital projection video motor, each said disc comprises reflective facet insertion cavities (138) and, in its centre, a certain number of binding holes, laid at 120°, with or not a central positioning hole, the said hole may be composed of a certain number of sectors (136), movable or not, themselves composed of a certain number of arrays or arches (137), movable or not, on which is achieved a certain number of cavities (138), which comprise themselves a certain number of holes through the different disc components, to adjust or seal the mirrors or filters, and which allow to insert the reflective facets (140) in direct contact with or by means of facet gate (139), which, according to the disc variants, are pointed according to angles imposed by the bottom of the cavities engraved in the device (144), or on surface (145), determined by a plane (146) or a series of steps (147), and/or determined by means of a support inserted in the cavity (139). The different sectors and/or arrays can be embedded the ones in the others, or superimposed, allowing to point the incident and/or emergent light beams on the track edge.

9. A device according to claims 1 and 2 **characterized by** mirrors and/or filters reflective surface placed on a substrate by a stack of a certain number of metallic and protection layers, which may be removed individually by a chemical process, laser, ultrasonic sound or other, to have a clean surface again, which introduced an automatic or not surface repairing function, where a variant will be the use of "active" reflective surface such as DLP, LCD or any other adaptive optical process allowing to vary some characteristics of the reflective beam such as for example the light intensity, the shape, allowing for example a geometric adaptation of the beam.

10. A device according to claims 8 and 9 **characterized by** a reflective facets positioning system (140), achieved according to the possible configurations, by means of runners (148) and/or by a "snap-on" device (149), or through a certain number of positioning devices, crossing over or not inside the disc, automated or not, for example hollow or full needles (142), or pneumatic plungers, or electric magnets, fixed on micrometrics translation stages, whose height adjustment fixes a specific angular orientation of each facet, which then is sealed, for example by a gluing process.

11. A device according to claim 1 **characterized by** optical source module, integrated or not in the optical matrix head which ensures the focalization, the collimation and the colinearity of the beams, having each one a cannula (1) with one or several optical sources, which generate one or several collimated beams, or with a very low divergence, these sources being for example ultra light-emitting diodes, laser diodes, or any other light source type of small size, fiber or not, integrated in a device (3), for example hexagonal-shaped, serving as support in the front for a pivot or ball-joint point (4), and in the back for a device allowing a positioning adjustment on the two axes perpendicular to the propagation axis (8) of the light beam (2), through a certain number of correction devices, for example three (5), (6) and (7), achieving a translation motion.

12. A device according to claims 1 and 11 **characterized by** positioning correction devices of the optical source module (9), (10) and (11), said devices are aligned according to the optical source module axis and not perpendicularly to this module.

13. A device according to claims 11 and 12 **characterized by** an optical module source which pivot or ball-joint point is arched support (13), rounded ring pivoting inside a rounded cage (14) and (15), ring made of soft material (16) in a rigid support (17) or any other device allowing the cannula, mobile around the two axes perpendicular to the optical source module axis, to revolve slightly with respect to this module.

14. A device according to claim 11 **characterized by** correction devices (5), (6), (7), (9), (10) and (11) of the optical source module, allowing the light beam propagation axis orientation (8), having static, for example screw plus spring type (21), (22) and (23), or dynamic adjustments, for example of micro-jack (24) and (25) and/or piezelectric type (26), or any other device allowing to achieve a dynamic controlled translation.

15. A device according to claims 1 and 11 **characterized by** cannula (1) from the optical source module that may fit for one or several optical sources (18), monochromatic or not, each composed for example of a laser, a fiber or not light-emitting diode, completed with a series of lens (19) and (20), or any other optical device allowing the static or dynamic beam focalization, with screw, micro-jack or piezoelectric elements. In the case for example of a fiber source (27), this one is structured in optical fibers matrix (29), contiguous or not, with any layout or a structured layout, for example with matrix (29), circle (30) and (31), spiral, rosaceous, helical shape, etc.

16. A device according to claims 1 and 15 **characterized by** optical source module integrating laser source with a dynamic adjustment function composed of a laser diode (35), a collimation device (37), a beam generating device (40), (42), (44), (45) comprising a wavelength shift device (41) or not, which is, according to the applications, replaced or completed with a light intensity modulation device, for example with a non linear crystal, a polarizer or any other device acting on one or several physical characteristics of the light beam, and **characterized** too by certain number of dynamic devices (36), (39), (43), (46), (47) of this source for example micro-jack, piezoelectric type, etc, allowing to vary the geometric characteristics, for example size, ellipticity, power, and so on, of the output module beam (48), by means of a quick electronic command (33).

17. A device according to claims 1 and 12 **characterized by** a certain number of optical sources modules devices, for example (50), (51) and (52), dedicated to the coloured beam generation of the optical matrix head or the multi-beam digital projection video motor, having a different emission wavelength, for example red, green and blue, and a certain number of mirrors and/or filters (53), (54), (55), (56), (61), (62) and (63) allowing the recombination of a certain number of distinct beams into a set of a certain number of parallel beams superimposed or very close to each other whose resulting is a coloured beam (57) whose spectrum depends on the proportion of the light intensity and the wavelength of each beam, where the direction of the beam coming from a coloured beam generator being statically or dynamically controlled with a certain number of devices, for example screw, micro-jack, piezoelectric cells, or any other element allowing a low modification of the different mirrors or filters orientation of the device, a possible variant of which being the use of one or several classical recombining cubes instead of mirrors or filters (54) and (55).

18. A device according to claim 1 **characterized by** a deviation periscope of a certain number of parallel light beams from an optical matrix head, or a certain number of optical sources modules, having a cockpit or protection cell (70), parallelepiped shaped, cylinder-shaped, hollow or engraved in a transparent material for the desired wavelengths, completed with a certain number of mirrors or filters, for example (84), (85), (86), (87), (88) and (89), allowing by a series of reflections and transmissions to modify the propagation direction orientation of a certain number of parallel light beams without modifying their collinearity, the input deviation periscope mirror or filter being achieved for example with a certain number of small mirrors or filters on supports maintained by a major support (93), for example stairs-step shaped, and mounted on dynamic correction elements as screw, microjacks, piezoelectric type, etc.

19. A device according to claim 1 **characterized by** a particular layout of optical source modules allowing to produce a set of collinear beams in a reduced volume, without modification of beams characteristics or intrinsic properties, said layout of sources modules (94) is, according to the variants, build as stairs-step shape (95), in staggered rows (96), "V" shape (97) and (98), or any other geometric layout allowing to obtain a certain number of collinear beams regularly spaced in a reduced volume.

## Patentansprüche

1. Digitale Videoprojektionsveeichtung mit mehreren Strahlen, umfassend einen Sendeblock (68), **dadurch gekennzeichnet, dass** sie eine bestimmte Anzahl übereinander angeordneter drehbarer optischer Scheiben (64) und (65) aufweist, welche wiederum eine bestimmte Anordnung von Spiegeln und/oder Filtern aufweisen, die so die Ablenkung einer Gesamtheit paralleler auftreffender Strahlen (69), die aus dem genannten Sendeblock (68) ausgetreten sind, welcher aus einer bestimmten Anzahl von Quellmodulen und/oder einer bestimmten Anzahl von Matrixköpfen (76) besteht, hervorrufen, wobei der genannte Block eine bestimmte Anzahl von optischen Quellmodulen, Generatoren farbiger Strahlen oder Ablenkungspyramiden (77) aufweist, wobei die Ablenkung z. B. in vertikaler Richtung durch die erste drehbare optische Scheibe und in horizontaler Richtung durch die zweite drehbare optische Scheibe ausgerichtet wird, und darüber hinaus eine optische Ablenkungs-Periskopvorrichtung (70), (80) aufweist, welche mit zwei Spiegeln und/oder Filtern (79) und (81), die ein reflektierendes Prisma bilden, oder nach einer anderen Ausführungsweise mit einer bestimmten Anzahl an Spiegeln und/oder Filtern (71) und einem Faltspiegel und/oder -filter (72), welcher einen vorab bestimmten Einfallswinkel an der ersten Scheibe ermöglicht, sodass nur ein geringer Platzbedarf erforderlich ist, versehen ist.

2. Vorrichtung nach Anspruch 1, **dadurch gekennzeichnet, dass** sie vor ihr einen optischen Matrixkopf aufweist, welcher selbst eine bestimmte Anzahl von Ringebenen (99), (100), (101), (102) und (103) aufweist, an denen, um Kreuzungen der Strahlen zu vermeiden, eine bestimmte Anzahl optischer Quellmodule (50), die zum Zentrum jedes Ringes gerichtet sind, angeordnet sind, um jeden Strahl zu Spiegeln und/oder Filtern (104) abzulenken, welche wiederum regelmäßig an einer zentralen Trägervorrichtung positioniert oder in die Masse des Trägers eingelassen sind, wobei der genannte Träger eine pyramidenartige (77), konische oder sonstige Form aufweist, auf dem jeder Spiegel und/oder Filter (104) so ausgerichtet ist, dass die Kolinearität der am Ausgang der Vorrichtung austretenden Strahlen (105) sichergestellt ist.

3. Vorrichtung nach Anspruch 2, **dadurch gekennzeichnet, dass** der Träger (104) der Spiegel und/oder der Filter beispielsweise eine zylindershampfartige Form mit einer schrägen Stumpfseite nach einem bestimmten Winkel aufweist, sodass jeder einfallende Strahl speziell ausgerichtet wird, wobei die Stumpfseite einen Hohlraum (106) aufweist, der an die Größe des Spiegels und/oder Filters angepasst ist, wobei der genannte Träger in einer Variante mit einem hexagonalen Element (107) versehen sein kann, das unter der Basis eingeschoben ist, um die Ausrichtung in der Phase der Herstellung und Eintstellung zu erleichtern.

4. Vorrichtung nach Anspruch 2, **dadurch gekennzeichnet, dass** die zentrale pyramidenartige Vorrichtung des optischen Matrixkopfes für einen digitalen Videoprojektor für mehrere Strahlen, eine Anordnung (109) mehrerer Ablenkungspyramiden (77) aufweist, die es ermöglichen, die aus diesem optischen Matrixkopf ausgetretenen Strahlen zu verdichten, wobei die genannten Pyramiden, entsprechend den Varianten, an einer Welle (109), (110), (111) befestigt sind, welche aus sehr dünnen, flachen oder nicht flachen, starren Stangen besteht, die es ermöglichen, eine Versperrung des Weges der aus einem Ring des optischen Matrixkopfes ausgetretenen Lichtstrahlen zu verhindern.

5. Vorrichtung nach Anspruch 2, **dadurch gekennzeichnet, dass** die optischen Quellmodule, die an jedem der Ringe des optischen Matrixkopfes, der einem digitalen Videoprojektor für mehrere Strahlen zugeordnet ist, verteilt sind, dieselbe Stufe (122) oder eine bestimmte Anzahl unterschiedlicher Stufen (123) der Ablenkungspyramide adressieren, wodurch der Platzbedarf des optischen Matrixkopfes optimiert wird.

6. Vorrichtung nach Anspruch 2, **dadurch gekennzeichnet, dass** der optische Matrixkopf für einen digitalen Videoprojektor für mehrere Strahlen einen Mechanismus zur Trimmkorrektur aufweist, der hinter diesem oder unter der zentralen Pyramide (124), (77) oder jedem anderen Element entsprechend der Ausbildung des optischen Matrixkopfes eingefügt ist, bestehend aus einer bestimmten Anzahl von Vorrichtungen vom Typ Schraube, Mikrozylinder oder piezoelektrischen Typs oder jedem anderen Element, welches es ermöglicht, eine kontrollierte Verschiebung vorzunehmen, die zwischen einem Sockel (128) und einer Basis (129) angeordnet sind und die Ausrichtung der Strahlen, die einer dynamischen Trimmkorrektur bedürfen, ermöglichen.

7. Vorrichtung nach Anspruch 2, **dadurch gekennzeichnet, dass** das pyramidenartige Element des optischen Matrixkopfes für einen digitalen Videoprojektor für mehrere Strahlen durch transparente Wände (130) oder perforierte Wände (131) geschützt ist, die den Weg der aus den Quellmodulen ausgetretenen Strahlen zu den Spiegeln und/oder Filtern der Vorrichtung (124) ermöglichen. Entsprechend den Varianten ermöglicht ihnen eine bestimmte Anzahl von Schutzvorrichtungen (130), sich ineinander zu verschachteln, um die Baumstruktur der Pyramiden nach Anspruch 9 mit oder ohne die Hilfe einer Zwischenplatte (131) zu bilden.

8. Vorrichtung nach Anspruch 1, **dadurch gekennzeichnet, dass** jede drehbare optische Scheibe (135) für einen digitalen Videoprojektor für mehrere Strahlen Hohlräume (138) zur Aufnahme reflektierender Facetten und in ihrer Mitte eine bestimmte Anzahl von Befestigungslöchern, die um 120° verteilt sind, mit oder ohne ein zentrales Positionierungsloch, aufweist, wobei die betreffende Scheibe aus einer bestimmten Anzahl von Sektoren (136), die abnehmbar sind oder nicht, bestehen kann, die wiederum aus einer bestimmten Anzahl von Stäben oder Bögen (137), die abnehmbar sind oder nicht, bestehen, an denen eine bestimmte Anzahl von Hohlräume (138) ausgebildet ist, die eine bestimmte Anzahl von Löchern durch die einzelnen Bestandteile der Scheibe aufweisen, um die Spiegel und/oder Filter einzustellen oder zu verspiegeln, und die die Aufnahme der reflektierenden Facetten (140) ermöglichten, mit direktem Kontakt oder über Facettenträger (139), die je nach Variante der Scheibe entsprechend den vom Boden der in die Masse eingelassenen (144) oder an der Oberfläche angeordneten Hohlräume (145) bestimmten Winkeln ausgerichtet sind, die durch eine Ebene (146) oder eine Reihe von Stufen (147) bestimmt sind, und/oder mithilfe eines Trägers, der sich in den Hohlraum (139) einfügt, bestimmt sind. Die verschiedenen Sektoren und/oder Stäbe sind ineinander einsteckbar oder übereinander angeordnet, und sie ermöglichen die Ausrichtung der einfallenden und/oder austretenden Lichtstrahles an der Spurkante.

9. Vorrichtung nach Anspruch 1 und 2, **dadurch gekennzeichnet, dass** die reflektierende Oberfläche der Spiegel und/oder der Filter auf einem Substrat durch Übereinander-Anordnung einer bestimmten Anzahl von metallischen Schichten und Schutzschichten aufgebracht ist, die später durch ein chemisches, Laser-, Ultraschall- oder sonstiges Verfahren einzeln entfernt werden können, um erneut eine saubere Oberfläche zu erhalten, was eine automatische oder nicht automatische Reflexionsfunktion der Oberflächen bewirkt. Eine Variante kann die Verwendung einer "aktiven" reflektierenden Oberfläche wie DLP, LCD oder jedes andere adaptive optische Verfahren sein, das es ermöglicht, bestimmte Eigenschaften des reflektierten Strahls, wie beispielsweise die Lichtstärke, die Form, zu ändern, was beispielsweise eine geometrische Anpassung des Strahls ermöglicht.

10. Vorrichtung nach Anspruch 8 und 9, **dadurch gekennzeichnet, dass** sie ein System zur Positionierung der reflektierenden Facetten (140) umfasst, welches entsprechend den möglichen Ausbildungen über Schienen (148) und/oder durch ein "Clip-System" (149) oder mithilfe einer bestimmten Anzahl von Haltevorrichtungen bewerkstelligt ist, welche die Scheibe in der Masse durchqueren oder nicht, automatisiert sind oder nicht, beispielsweise hohle oder massive Nadeln (142) oder pneumatische Saugnäpfe oder Elektromagneten, welche auf mikrometrischen Verschiebungsplatinen befestigt sind, deren Höheneinstellung eine spezielle Winkelausrichtung jeder Facette bestimmt, die anschließend, beispielsweise durch ein Klebeverfahren, versiegelt wird.

11. Vorrichtung nach Anspruch 1, **dadurch gekennzeichnet, dass** jedes optische Quellmodul, welches in den optischen Matrixkopf, der die Fokussierung, die Kollimation und die Kolinearität der Strahlen sicherstellt, integriert ist oder nicht, ein Röhrchen (1) aufweist, das eine oder mehrere optische Quellen umfasst, die einen oder mehrere kollimierte oder sehr gering divergierende Strahlen erzeugen, wobei diese Quellen Ultraleuchtdioden, Laserdioden oder Lichtquellen jedes anderen Typs mit geringem Platzbedarf, faseroptisch oder nicht, in eine Vorrichtung (3) integriert, zum Beispiel mit sechseckiger Form, die als Träger vom für einen Schwenk- oder Kugelpunkt (4) und hinten für eine Vorrichtung dient, welche eine Positionsanpassung an den beiden senkrecht zur Ausbreitungsrichtung (8) des Lichtstrahls (2) stehenden Achsen ermöglicht, dank einer bestimmten Anzahl von Korrekturvorrichtungen, zum Beispiel drei (5), (6) und (7), die eine Verschiebungsbewegung vollziehen, sein können.

12. Vorrichtung nach Anspruch 1 und 11, **dadurch gekennzeichnet, dass** die Vorrichtungen zur Korrektur der Positionierung des optischen Quellmoduls (9), (10) und (11), nach der Visierachse des optischen Quellmoduls und nicht senkrecht zu dieser ausgerichtet sind.

13. Vorrichtung nach Anspruch 11 und 12, **dadurch gekennzeichnet, dass** der Schwenk- oder Kugelpunkt des optischen Quellmoduls vom Typ eines gebogenen Auflagers (13), einer in einem runden Gehäuse drehbar gelagerten runden Stange (14) und (15), einer Stange aus biegsamem Material (16) in einem starren Träger (17) oder jede andere Vorrichtung ist, die es dem Röhrchen, das nach den beiden senkrecht zur Visierachse des optischen Quellmoduls stehenden Achsen beweglich ist, ermöglicht, sich leicht bezogen auf das optische Quellmodul zu drehen.

14. Vorrichtung nach Anspruch 11, **dadurch gekennzeichnet, dass** die Korrekturvorrichtungen (5), (6), (7), (9), (10) und (11) des optischen Quellmoduls, welche die Ausrichtung der Ausbreitungsachse des Lichtstrahls (8) ermöglichen, statisch, zum Beispiel vom Typ Schraube mit Feder (21), (22) und (23), oder dynamisch vom Typ Mikrozylinder (24) und (25) oder piezoelektrischen Typs (26) oder jede andere Vorrichtung sind, welche die Vornahme einer dynamisch kontrollierten Verschiebung ermöglichen.

15. Vorrichtung nach Anspruch 1 und 11, **dadurch gekennzeichnet, dass** das Röhrchen (1) des optischen Quellmoduls es ermöglicht, eine oder mehrere optische Quellen (18), monochrom oder nicht, zu empfangen, von denen jede zum Beispiel aus einem Laser, einer faseroptischen oder nicht faseroptischen Leuchtdiode, ergänzt durch eine Kombination von Linsen (19) und (20), oder jeder anderen optischen Vorrichtung besteht, welche die Fokussierung des Strahls auf statische oder dynamische Weise mithilfe von Elementen vom Typ Schraube, Mikrozylinder oder piezoelektrischen Typs ermöglicht. Im Fall zum Beispiel einer faseroptischen Lichtquelle (27) kann diese in einer Matrix von optischen Fasern (29), die aneinanderstoßen oder nicht, nach einer beliebigen oder strukturierten Anordnung, zum Beispiel in Form einer Matrix (29), eines Kreises (30) und (31), einer Spirale, Rosette, Schnecke u. a., organisiert sein.

16. Vorrichtung nach Anspruch 1 und 15, **dadurch gekennzeichnet, dass** das optische Quellmodul eine Laserquelle mit dynamischer Einstellfunktion umfasst, bestehend aus einer Laserdiode (35), einer Kollimierungsvorrichtung (37), einer Strahlbildungsvorrichtung (40), (42), (44), (45), welche eine Wellenlängenverschiebungsvorrichtung (41) aufweist oder nicht, die je nach Anwendung durch eine Vorrichtung zur Modulation der Leuchtstärke, zum Beispiel auf Basis eines nicht linearen Kristalls, einen Polarisierer oder jede andere Vorrichtung, die auf eine oder mehrere physikalische Eigenschaften des Lichtstrahls einwirkt, ersetzt oder ergänzt werden kann, und ebenfalls **dadurch gekennzeichnet, dass** diese Quelle mit einer bestimmten Anzahl dynamischer Vorrichtungen (36), (39), (43), (46), (47) zum Beispiel vom Typ Mikmzylinder, piezoelektrischen Typs usw. versehen ist, die eine Veränderung der geometrischen Eigenschaften, zum Beispiel der Größe, der Elliptizität, der Leistung usw. des Lichtstrahls (48) am Ausgang des Moduls, mithilfe einer schnellen elektronischen Betätigung (33), ermöglichen.

17. Vorrichtung nach Anspruch 1 und 12, **dadurch gekennzeichnet, dass** sie für die Erzeugung eines farbigen Strahls für den optischen Matrixkopfund/oder den digitalen Videoprojektor für mehrere Strahlen eine bestimmte Anzahl an optischen Quellmodulvorrichtungen, zum Beispiel (50), (51), und (52), mit einer unterschiedlichen Sende-Wellenlänge, zum Beispiel rot, grün und blau, und eine bestimmte Anzahl von Spiegeln und/oder Filtern (53), (54), (55), (56), (61), (62) und (63) aufweist, die die Rekombination einer bestimmten Anzahl unterschiedlicher Strahlen in einer Gruppe einer bestimmten Anzahl übereinander liegender oder sehr naher paralleler Strahlen ermöglichen, deren Ergebnis ein farbiger Strahl (57) ist, dessen Spektrum von der Proportion der Lichtstärke und der Wellenlänge jedes dieser Strahlen abhängt, wobei die Richtung des aus dem Farbstrahlgenerator ausgetretenen Strahls statisch oder dynamisch einstellbar ist mithilfe einer bestimmten Anzahl von Vorrichtungen, zum Beispiel Schrauben, Mikrozylinder, piezoelektrische Zellen oder jedes andere Element, welches eine leichte Veränderung der Ausrichtung der einzelnen Spiegel und/oder Filter, die die Vorrichtung bilden, ermöglicht, von der eine mögliche Variante die Verwendung eines oder mehrerer klassischer Rekombinationswürfel anstelle der Spiegel und/oder Filter (54) und (55) ist.

18. Vorrichtung nach Anspruch 1, **dadurch gekennzeichnet, dass** das Ablenkungsperiskop einer bestimmten Anzahl paralleler Lichtstrahlen (83), die aus einem optischen Matrixkopf ausgetreten sind, oder einer bestimmten Anzahl von optischen Quellmodulen mit einem Schutzgehäuse oder Schutzabdeckung (70) parallelepipedischer oder zylindrischer Form, hohl oder in der Masse eines für die betreffenden Wellenlängen transparenten Werkstoffes ausgebildet, ergänzt durch eine bestimmte Anzahl von Spiegeln und/oder Filtern (84), (85), (86), (87), (88) und (89), versehen ist, welche es durch sukzessive Reflexionen und/oder Übertragungen ermöglichten, die Ausrichtung der Ausbreitungsrichtung einer bestimmten Anzahl paralleler Lichtstrahlen zu verändern, ohne die Kolinearität zwischen allen diesen Strahlen zu verändern, wobei der Spiegel und/oder Filter am Eingang des Ablenkungsperiskops zum Beispiel mit einer bestimmten Anzahl kleiner Spiegel und/oder Filter auf Trägern (92) ausgebildet ist, welche durch einen Hauptträger (93), zum Beispiel in Form von Treppenstufen, und der auf dynamischen Korrekturelementen vom Typ Schraube, Mikrozylinder, piezoelektrischen Typs u. a. montiert werden kann, an Ort und Stelle gehalten werden.

19. Vorrichtung nach Anspruch 1, **dadurch gekennzeichnet, dass** sie eine besondere Ausbildung von optischen Quellmodulen aufweist, welche es ermöglichen, eine Gruppe kolinearer Strahlen bei einem reduzierten Platzbedarf zu erzeugen, ohne die innewohnenden Eigenschaften oder Merkmale der Strahlen zu verändern, wobei diese Ausbildung der Quellmodule (94) je nach Variante in Form von Treppenstufen (95) oder versetzt (96) oder in V-Form (97) und (98) oder nach jeder anderen geometrischen Anordnung, welche es ermöglicht, eine Gruppe einer bestimmten Anzahl kolinearer Strahlen mit regelmäßigem Abstand bei einem reduzierten Platzbedarf zu erhalten, bewerkstelligt sein kann.
